# EUROPEAN PATENT APPLICATION

(11) **EP 3 147 471 A1**
(43) Date of publication of application: **29.03.2017**
(21) Application number: 15785986.9
(22) Date of filing: 08.04.2015
(51) Int. Cl.: F01N 9/00, F01N 11/00, F01N 3/20, F01N 3/36

(54) **METHOD FOR REGENERATING CATALYST FOR OXIDIZING COMPRESSED NATURAL GAS VEHICLE EXHAUST GAS**

(30) Priority: 28.04.2014 KR 20140050482
(71) Applicant: Heesung Catalysts Corporation, Siheung-si, Gyeonggi-do 429-848 (KR)
(72) Inventor: HAN, Hyun-sik, Seoul 138-842 (KR); NA, Seung Chul, Anyang-si, Gyeonggi-do 431-720 (KR); KIM, Eun-seok, Ansan-si, Gyeonggi-do 426-743 (KR); KIM, Joon-Woo, Gunpo-si, Gyeonggi-do 435-738 (KR)
(74) Representative: Regimbeau
(86) International application number: PCT/KR2015/003502
(87) International publication number: WO 2015/167138

(57) **Abstract**

This invention relates to a method of regenerating a deactivated catalyst, which carries precious metal components including platinum and palladium and which is used to purify a gas exhausted from a compressed natural gas lean-burn engine. The method includes creating a reduction atmosphere over the catalyst. The creating the reduction atmosphere over the catalyst includes controlling an air-fuel ratio or directly injecting CNG fuel into the catalyst.

## Description

### Technical Field

The present invention relates, in general, to a method of regenerating a catalyst for oxidizing a gas exhausted from a compressed natural gas vehicle and, more particularly, to a method of regenerating a catalyst, which carries precious metal components including platinum and palladium and which is used to purify a gas exhausted from a compressed natural gas lean-burn engine, the method including creating a reduction atmosphere.

### Background Art

Vehicles using CNG (Compressed Natural Gas) as fuel have merits in that the vehicles are environmentally friendly, have excellent economic feasibility, and emit only a small amount of toxic CO and gas that is almost completely odor- and smoke-free.

Examples of the related art of a catalyst for purifying a gas exhausted from a compressed natural gas vehicle and a method of purifying the gas may include Korean Patent Nos. 230874 and 461125. Korean Patent No. 230874 (a catalyst for purifying a gas exhausted from a compressed natural gas vehicle and a method of purifying the gas) discloses a catalyst that includes a ceramic carrier, the predetermined supporting materials, such as alumina, ceria, and zirconia, and a precious metal, which serves as a catalytic active material, in order to effectively purify methane, which accounts for most of the gas exhausted from the CNG vehicle. Korean Patent No. 461125 (a catalyst for purifying a gas exhausted from a compressed natural gas vehicle) discloses a catalyst for purifying a gas exhausted from a compressed natural gas vehicle in order to purify methane, which is difficult to purify. The catalyst includes a ceramic carrier a predetermined amount of gamma-alumina, La₂O₃, 1 to 50 g of CeO₂, 1 to 20 g of BaO, and 0.1 to 10 g of a mixture including palladium (Pd) and platinum (Pt) at a weight ratio of 5 to 15 : 1 as a catalytic active material, based on 1 L of the carrier. Korean Patent No. 670221, filed by the present applicant, describes an activity-improving catalyst for oxidizing a gas exhausted from a compressed natural gas vehicle, in which precious metal components including palladium and platinum are carried in the catalyst. The catalyst includes palladium-impregnated first alumina, platinum-impregnated second alumina, composite ceria, represented by CeO₂-ZrO₂, and nickel oxide carried in a ceramic carrier.

### Disclosure

### Technical Problem

Currently, a catalyst, which includes precious metal components including platinum and palladium and which is used to purify a gas exhausted from a compressed natural gas vehicle, is applied as a CNG exhaust gas purifying catalyst in a CNG engine operated in a lean burn atmosphere. However, there is a problem related to the catalyst constitution, that is, a problem of deactivation of the catalyst. The causes of deactivation of the platinum/palladium-based catalyst for purifying a gas exhausted from the CNG lean-burn engine are still unknown. There are various hypotheses about the deactivation mechanism. There is the hypothesis that PdO is decomposed into Pd at high temperatures, thereby destroying active sites. Further, there is the opinion that sulfation is the cause of the deactivation. That is, oxygen and SO₂ in the fuel may react to form sulphate. Meanwhile, another opinion suggests that CO₂ and H₂O affect the activity of the CNG catalyst. Further, there are research papers reporting that Pd(OH)₂ is generated due to an excessive amount of water molecules, causing deactivation.

### Technical Solution

Accordingly, the present invention has been made keeping in mind the above problems occurring in the related art, and an object of the present invention is to provide a method of regenerating a deactivated catalyst for purifying a gas exhausted from a compressed natural gas vehicle. The present inventors have obtained strong evidence that a CNG oxidizing catalyst is deactivated by oxygen adsorbed on the catalyst. In other words, the present inventors have confirmed that is it possible to regenerate the deactivated catalyst by reducing the surface of the CNG catalyst based on the observation that the CNG oxidizing catalyst is deactivated by O₂ self-poisoning. In order to accomplish the above object, the present invention provides a method of regenerating a catalyst, which carries precious metal components including platinum and palladium and which is used to purify a gas exhausted from a compressed natural gas lean-burn engine. The method includes judging the deactivation of the catalyst and creating a reduction atmosphere over the catalyst.

### Description of Drawings

FIG. 1 schematically shows the process of deactivation of a conventional CNG lean-burn engine exhaust gas catalyst;
FIG. 2 shows a methane conversion ratio of the conventional CNG catalyst as a function of a time;
FIG. 3 is a graph showing that the methane conversion ratio is recovered when the deactivated catalyst is subjected to reduction treatment using only CH₄; and
FIG. 4 is a flowchart showing a process of regenerating a catalyst according to the present invention.

### Best Mode

Hereinafter, the present invention will be described in detail, but is not limited to the exemplary embodiments.

A catalyst for purifying a gas exhausted from a CNG lean-burn engine includes Pt and Pd as main components. However, there is a problem in that the current catalyst is rapidly deactivated with the passage of time due to various causes.

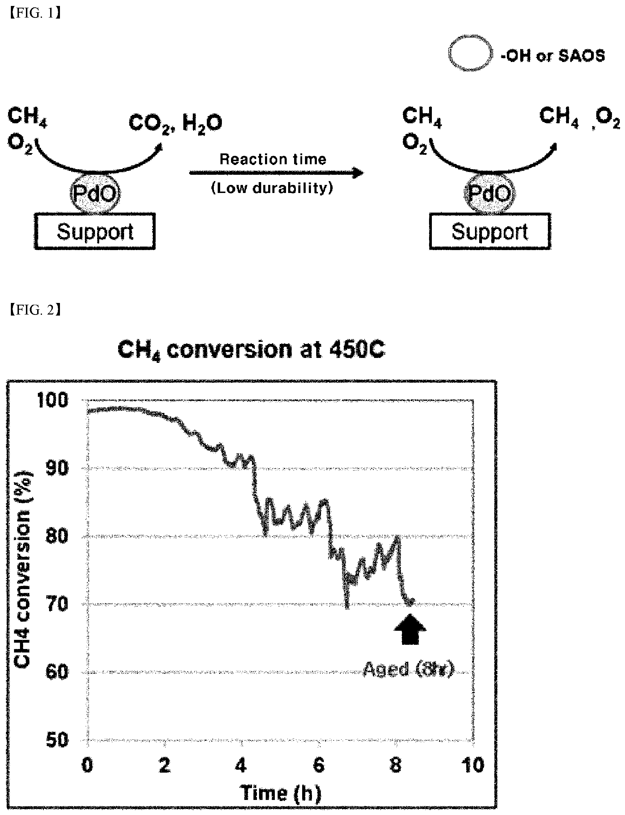

FIG. 1 schematically shows the process of deactivation of a conventional CNG lean-burn engine exhaust gas catalyst. The CNG lean-burn engine exhaust gas catalyst includes, as described in Korean Patent No. 670221, palladium-impregnated first alumina, platinum-impregnated second alumina, composite ceria, represented by CeO₂-ZrO₂, and nickel oxide carried in a metal or ceramic carrier. The entire contents of the aforementioned patent document are incorporated herein by reference. FIG. 1 schematically shows only the structure of palladium-impregnated first alumina. The Pd catalyst does not exhibit any further activity with longer reaction times. The reasons may be various, but the present inventors have found that the deactivation is caused by a deactivation material, namely active oxygen, generated on the catalyst.

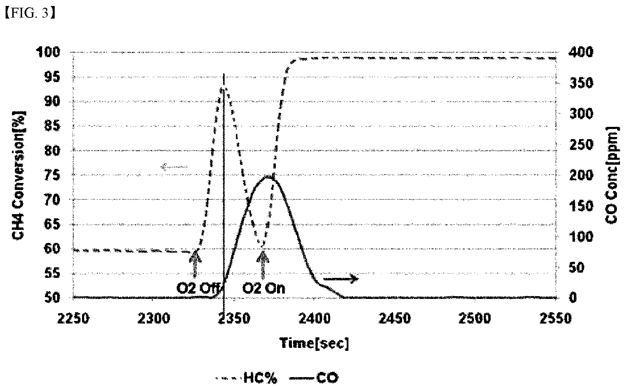

FIG. 2 is a deactivation graph showing that the methane conversion ratio is rapidly decreased with the passage of the reaction time. A conventional catalyst, which includes 300 g/ft³ of PGM (precious metal) and 1 Pt/5 Pd and which is used to purify a gas exhausted from a CNG lean-burn engine, is hydrothermally aged under a 10% water condition at 750°C for 10 hrs, a supply gas including 7000 ppm of CH₄, 5% of O₂, 5% of H₂O, and N₂ as the balance is injected, and a space velocity (SV) is set to 50,000 1/hr, thereby obtaining the test result of FIG. 2. As shown in FIG. 2, the conventional catalyst is deactivated after 8 hrs under the aforementioned conditions. FIG. 3 shows that the methane conversion ratio recovers when the deactivated catalyst is subjected to reduction treatment using only CH₄, which is fuel, as a reducing agent. Specifically, when the injection of oxygen is suppressed and only methane is injected into the CNG catalyst, the activity of the CNG catalyst, providing a conversion ratio of 60%, is remarkably restored to a maximum of 93%. Further, from the gradual increase in CO concentration, it is understood that injected methane is partially oxidized due to the oxygen adsorbed on the catalyst to generate CO and to increase the number of active sites on the surface of the catalyst. From FIG. 3, it can be confirmed that when the supply gas is normalized between 2350 (sec) and 2400 (sec) after the catalyst is activated, that is, when the supply gas including 7000 ppm of CH₄, 5% of O₂, 5% of H₂O, and N₂ as the balance is injected, the methane conversion ratio is completely restored. FIG. 3 is strong evidence that the CNG oxidizing catalyst is deactivated due to oxygen molecules adsorbed on the surface of the catalyst, or activated oxygen molecules. The present inventors propose a method of regenerating the deactivated CNG oxidizing catalyst based on the aforementioned description.

A method of regenerating a deactivated catalyst for purifying a gas exhausted from a compressed natural gas lean-burn engine according to the present invention includes judging the deactivation of the catalyst and creating a reduction atmosphere over the catalyst. The judging deactivation of the catalyst, which is not particularly limited, includes measuring the difference between the temperatures of the CNG catalyst at the inlet and outlet thereof, or measuring the accumulated traveling distance of a vehicle. Further, the creating the reduction atmosphere over the catalyst includes controlling an air-fuel ratio, specifically, reducing the air-fuel ratio, or directly injecting CNG fuel into the catalyst. For example, a temperature-measuring device may be further included at the lower or upper region of the catalyst in order to measure the temperature of the catalyst. Further, the creating the reduction atmosphere includes controlling the air-fuel ratio to a value greater than a theoretical air-fuel ratio or post-injecting fuel. Since the type of measuring device, the installation position, the method of controlling the air-fuel ratio of the engine, and the method of post-injecting fuel are constitutions and processes that may be realized by those skilled in the art, a detailed description thereof will be omitted. The essential concept of the regenerating method of the present invention is based on the fact that the CNG catalyst, that is, the catalyst, which carries precious metal components including platinum and palladium and which is used to purify a gas exhausted from a compressed natural gas lean-burn engine, is deactivated due to oxygen adsorbed on the catalyst or activated oxygen. In the method, the reduction step may be provided in order to remove oxygen from the catalyst, thereby regenerating the deactivated catalyst.

In order to accomplish the aforementioned object, a device for regenerating a catalyst for use in vehicles according to the present invention includes a CNG catalyst, temperature sensors provided on both ends of the CNG catalyst, and a control unit for controlling regeneration of the CNG catalyst depending on a difference in temperature. The control unit controls the general operation of the engine according to operation control information including a vehicle speed, RPM, the displacement of a brake pedal, the displacement of a clutch pedal, and the displacement of an accelerator pedal. The control unit also serves to judge the temperature of the CNG catalyst from the temperature sensors provided at both ends of the CNG catalyst and to perform control to increase the air-fuel ratio of the engine when the temperature of the rear end is lower than that of the front end, thereby regenerating the CNG catalyst. A target concentration-difference map (library), which is determined using repeated experimentation and analysis and which depends on the temperature of the CNG catalyst, is set in the control unit.

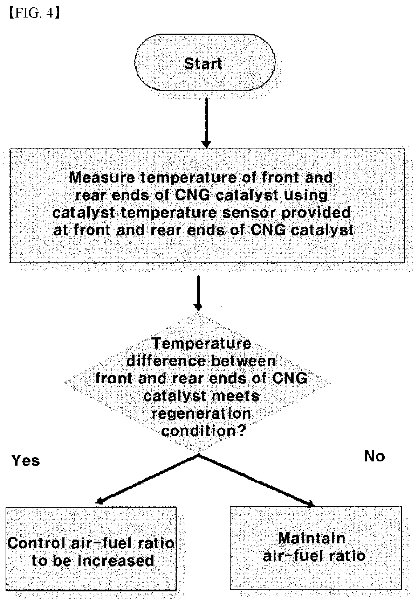

The method of regenerating the catalyst of the CNG vehicle according to the present invention includes detecting the temperatures of both ends of the CNG catalyst when the engine is turned on, checking the temperature difference between the inlet and the outlet of the catalyst to thus judge whether the temperature difference is the target temperature difference corresponding to the regeneration condition of the CNG catalyst, and performing control to increase the air-fuel ratio when the CNG catalyst is in the regeneration condition. Specifically, as shown in FIG. 4, the method of regenerating the catalyst according to the present invention includes judging deactivation of the CNG catalyst and creating the reduction atmosphere over the catalyst. For example, when the engine is operated under the condition that the air-fuel ratio is 14.7 : 1 or more, the method includes measuring the temperatures of the front and rear ends of the CNG catalyst using a catalyst temperature sensor provided at the front and rear ends of the catalyst (S100), judging whether the CNG catalyst is under the regeneration condition using a predetermined temperature difference (S200), and controlling the air-fuel ratio to be increased when the temperature difference between the front and rear ends of the CNG catalyst is judged to correspond to the regeneration condition (S300). In another embodiment, a method of regenerating a catalyst according to the present invention includes judging the deactivation of the CNG catalyst and creating a reduction atmosphere over the catalyst. For example, when an engine is operated under a condition that an air-fuel ratio is 14.7 : 1 or more, the method may include measuring the amount of NOx passing through front and rear ends of the catalyst and measuring a catalyst temperature using a nitrogen oxide concentration measuring device and a catalyst temperature sensor provided respectively at the front and rear ends of the CNG catalyst, comparing a target NOx concentration map (library) with a current NOx concentration at predetermined temperatures to thus judge whether the CNG catalyst is under a regeneration condition, and controlling the air-fuel ratio to be increased based on the judgment that the CNG catalyst is under the regeneration condition when the NOx concentration difference between the front and rear ends of the CNG catalyst is the target NOx concentration difference.

According to the present invention, control may be performed to increase the air-fuel ratio, thereby removing adsorbed oxygen. Alternatively, adsorbed oxygen may be removed using post-injection. Further, the judgment of the regeneration condition may be simplified. For example, after the CNG catalyst is installed, control may be performed to increase the air-fuel ratio after a predetermined accumulated traveling distance, or post-injection may be performed to remove adsorbed oxygen.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of regenerating a deactivated catalyst for purifying a gas exhausted from a compressed natural gas lean-burn engine, the method comprising:
creating a reduction atmosphere over the catalyst.

2. The method of claim 1, further comprising:
judging deactivation of the catalyst.

3. The method of claim 2, wherein the judging the deactivation of the catalyst includes measuring a difference between temperatures at an inlet and an outlet of the catalyst or measuring an accumulated traveling distance of a vehicle.

4. The method of claim 1 or 2, wherein the creating the reduction atmosphere over the catalyst includes controlling an air-fuel ratio or directly injecting CNG fuel into the catalyst.

5. The method of claim 4, wherein the controlling the air-fuel ratio includes reducing the air-fuel ratio.
